# EUROPÄISCHE PATENTSCHRIFT

(11) **EP 0 858 929 B1**
(45) Veröffentlichungstag und Bekanntmachung des Hinweises auf die Patenterteilung: **02.05.2002**
(21) Anmeldenummer: 98102495.3
(22) Anmeldetag: 13.02.1998
(51) Int. Cl.: B60N 2/48

(54) **Kopfstütze für einen Kraftfahrzeugsitz**
Head rest for automotive seat
Appuie tête pour siège d'automobile

(30) Priorität: 18.02.1997 DE 19706290
(43) Veröffentlichungstag der Anmeldung: 19.08.1998
(73) Patentinhaber: ADAM OPEL AG, 65423 Rüsselsheim (DE)
(72) Erfinder: Specht, Wolfgang Martin, Dipl.-Ing. (FH), 82340 Feldafing (DE); Muhr, Jürgen, Dipl.-Ing. (FH), 82288 Kottgeisering (DE); Leuchtmann, Andrew, Dipl.-Ing., 55595 Mandel (DE)

(56) Entgegenhaltungen:
- WO-A-91/02669
- DE-A- 2 152 202
- DE-A- 2 206 329
- DE-U- 29 609 786
- DE-U- 29 711 139
- GB-A- 2 301 906

## Beschreibung

Die Erfindung betrifft eine Kopfstütze für einen Kraftfahrzeugsitz mit einem Stützkissen nach dem Oberbegriff des Patentanspruches 1. Eine derartige Kopfstütze ist bekannt.

Es ist bekannt, das Stützkissen unter Anpassung der Körpergröße des Fahrzeuginsassen in seiner Höhe und seiner Neigung zu verstellen. Bei einem Unfallgeschehen wirken auf den Kopf des Fahrzeuginsassen aufgrund der überhöhten Beschleunigungen bzw. Abbremsungen erhebliche Reaktionskräfte auf den Körper, insbesondere im Kopfbereich, welche dazu führen können, daß der Kopf des Fahrzeuginsassen über die Oberkante des Stützkissens nach hinten geschleudert wird, wodurch schwerwiegende Verletzungen, insbesondere im Halswirbelbereich, auftreten. Häufig geschehen diese Verletzungen auch aufgrund einer nicht korrekten Stellung der Kopfstütze während des normalen Fahrbetriebs.

Aus der DE 296 09 786 U1 ist ein Kraftfahrzeugsitz mit einer Kopfstütze für einen Insassen bekannt, die im Falle eines Heckaufpralls durch einen Verstellmechanismus nach vorne schwenkbar ist. Damit soll der Kopf des Insassen nach hinten abgestützt und dadurch eine Verletzung im Nackenwirbelbereich verhindert werden. Der Verstellmechanismus weist im wesentlichen einen Massekörper auf, der über ein biegsames Zugelement derart mit der Kopfstütze verbunden ist, dass die durch den Heckaufprall hervorgerufenen Trägheitskräfte des Massekörpers auf die Kopfstütze übertragen werden. Bei dieser Lösung ist für den Fall eines Heckaufpralls lediglich eine Schwenkung der Kopfstütze zum Kopf des Insassen vorgesehen, auch wenn die Kopfstütze bezüglich der Höhe nicht korrekt eingestellt ist. In diesem Falle können schwerwiegende Verletzungen im Nackenwirbelbereich nicht ausgeschlossen werden.

Aus der nachveröffentlichten EP-A-0 877 675 ist ein weiterer Kraftfahrzeugsitz mit einer Kopfstütze bekannt, die im Falle eines Heckaufpralls durch einen Verstellmechanismus in ihren vertikalen Abmessungen veränderbar ist. Diese Kopfstütze wird von Stützeinrichtungen getragen, die mittels drehbar gelagerten Drehelementen an der Sitzlehne gelagert sind. Durch die Drehbewegung der Stützeinrichtungen um die Achse der Drehelemente ist auch bei dieser Lösung eine Schwenkung der Kopfstütze zum Kopf des Insassen ermöglicht.

Aufgabe der Erfindung ist es, eine Kopfstütze der eingangs genannten Art zu schaffen, bei welcher eine erhebliche Verbesserung der Sicherheitsfunktion der Kopfstütze erreicht wird.

Die Aufgabe wird erfindungsgemäß durch die Merkmale des Patentanspruches 1 gelöst. Das Stützkissen ist in vertikaler Richtung, bevorzugt schräg nach vorne oder oben, teleskopierbar ausgebildet, so daß bei einem Unfall eine teleskopierte Kopfstütze erreicht wird, die eine Nachhintenbewegung des Kopfes über die obere Stützkissenkante verhindert. Gleichzeitig wird eine sichere Abstützung über die Stützeinrichtung aufgrund der teleskopartig mit Kraft- und Formschluß ineinander greifenden Kissenteile mit der Stützeinrichtung an der Sitzlehne gewährleistet.

Die Abmessung des Stützkissens schräg nach vorne und nach oben erfolgt, insbesondere bei überhöht einwirkender Beschleunigung, durch die Verstelleinrichtung. Die überhöht einwirkende Beschleunigung kann durch einen oder mehrere Beschleunigungssensoren erfaßt werden. Für den Verstellantrieb besitzt die Verstelleinrichtung einen bei der überhöhten Beschleunigung auslösbaren Kraftspeicher, beispielsweise in Form einer Treibgasquelle (pyrotechnischer Gasgenerator, Hybridgasgenerator), oder einen mechanischen Kraftspeicher in Form einer Feder, insbesondere Schraubenfeder, die durch Zug oder Druck wirken kann. Beim Auslösen der vom Kraftspeicher gelieferten Antriebskraft erfolgt die Teleskopierung der vertikalen Abmessungen des Stützkissens.

Das Stützkissen kann hierzu aus wenigstens zwei in vertikaler Richtung und bevorzugt schräg geneigt nach vorne gegeneinander bewegbare Kissenteile aufweisen. Auf wenigstens eines dieser Kissenteile wirkt die Antriebskraft des Kraftspeichers. Die Kissenteile sind sowohl während der Teleskopierbewegung als auch im Ruhezustand, d.h. bei normaler Betriebsstellung sowie bei teleskopierter Stellung zur Erzielung der gewünschten Sicherheitsfunktion mit Formschluß derart aneinander gebunden, daß vom Kopf des Fahrzeuginsassen ausgeübte Kräfte sicher in die Stützeinrichtung, welche in der Sitzlehne verankert ist, abgeleitet werden. Die Stützkissenteile sind hierzu in bevorzugter Weise ineinander geschachtelt. Wenn zwei Stützkissenteile vorgesehen sind, sind diese ineinander wie Schubkasten und Schubkastenführung form- und kraftschlüssig miteinander verbunden.

Für die teleskopierende Bewegung des wenigstens einen Kissenteils kann bezüglich der Stützeinrichtung eine Führung vorgesehen sein, die schräg nach oben und vorne geneigt ist. Insbesondere das oben liegende Kissenteil wird längs dieser Führung gegenüber einem unten liegenden Kissenteil, welches fest mit der Stützeinrichtung verbunden bleibt, geführt. Die Führung wird bevorzugt von zwei ineinander greifenden Führungselementen gebildet, von denen das eine Führungselement am oberen Kissenteil und das andere Führungselement am unteren Kissenteil vorgesehen ist. Auch der Formschluß, mit welchem die wenigstens zwei Kissenteile aneinander liegen, erstreckt sich in Richtung dieser Führung.

In bevorzugter Weise wird bei der Erfindung eine Höhen- und Neigungsverstellung der Kissenteile, welche das Stützkissen bilden, erreicht. Die Neigungsverstellung ist schräg nach vorne und nach oben gerichtet. Die Kopfstütze bzw. das Stützkissen kann hierzu in seine teleskopierte Sicherheitsposition sowohl aus einer untersten Komfortposition mit verschiedenen Komfortneigungsstellungen sowie aus einer obersten Komfortposition mit verschiedenen Komfortneigungsstellungen schräg nach vorne und nach oben bewegt werden. Dies bedeutet, daß die Kopfstütze sowohl für große Fahrzeuginsassen als auch für kleine Fahrzeuginsassen aus entsprechenden Komfortpositionen im Normalbetrieb in eine zugeordnete Sicherheitsposition (teleskopierte Position) bewegt werden kann. Die teleskopierte Kopfstütze ist beispielsweise durch eine am ausgelösten Kraftspeicher wirkende Rücklaufsperre in ihre teleskopierten Sicherheitsposition auch bei Mehrfachkollisionen sicher gehalten.

In der teleskopierten Sicherheitsposition kann das unten liegende Kissenteil an einem Endanschlag entweder an der Stützeinrichtung (Raststangen) oder an der Oberkante der Sitzlehne abgestützt sein.

Der Kraftspeicher, welcher bei seiner Auslösung die Antriebskraft für die Gegeneinanderbewegung der Kissenteile liefert, kann mechanisch oder elektrisch auslösbar sein.

Im Falle eines Treibgasgenerators als Kraftspeicher kann die Auslösung mit Hilfe einer mechanisch (Federkraft) betätigten Zündeinrichtung oder einer elektrisch betätigten Zündeinrichtung erfolgen. Für die elektrische Auslösung kann ein elektrischer Anschluß bei der Arretierung der Stützeinrichtung an der Sitzlehne hergestellt werden.

Bei der Ausbildung des Kraftspeichers als Feder kann dieser Kraftspeicher mit reversibler Federwirkung ausgebildet sein, so daß nach jeder Auslösung auch bei einer Fehlauslösung der Kraftspeicher wieder in seine Ausgangsposition (Ruheposition) zurückgebracht werden kann. In bevorzugter Weise ist für die Auslösung des Federkraftspeichers ein mechanischer Sensor vorgesehen, wobei durch den mechanischen Sensor eine unter Federspannung (insbesondere unter der Spannung der Kraftspeicherfeder) stehende Verriegelung die Kraftspeicherauslösung in Ruhestellung (verriegelter Zustand) hält.

Der mechanische Sensor kann hierzu eine Sensormasse, die über eine oder mehrere Sensorfedern in ihrer Ruhestellung abgestützt ist, und eine von der Sensormasse betätigte Sperre aufweisen, welche die Verriegelung in ihrem Ruhezustand hält. Hierzu können Sensormasse und Sperre einstückig ausgebildet sein. Der Sensor und die Verriegelung können in erfindungsmäßer Kombination in der Weise zusammenwirken, daß nach der Freigabe der Verriegelung die Verriegelung durch den Antrieb des ausgelösten Kraftspeichers so bewegt wird, daß sie durch eine Zwangsführung in die im Ruhezustand eingenommene Verriegelungsposition zurückgebracht wird und in dieser Position verbleibt. Beim Zurückbringen des Kraftspeichers insbesondere des Federkraftspeichers in die Ruheposition (gespannte Position) wird auch die Verriegelung in ihre Ausgangslage (Ruheposition) zurückgebracht und von der ebenfalls in der Ruheposition befindlichen Sperre gehalten, so daß der Kraftspeicher in seiner Ruheposition, insbesondere in seiner gespannten Position gehalten wird. Die Sperre kann in bevorzugter Weise durch die wenigstens eine Sensorfeder in ihre Ruheposition zurückgebracht und gehalten werden.

Anhand der Figuren wird an Ausführungsbeispielen die Erfindung noch näher erläutert. Es zeigt
- Fig. 1: ein erstes Ausführungsbeispiel einer Kopfstütze in normaler Betriebsstellung (Ruheposition) in Seitenansicht;
- Fig. 2: das Ausführungsbeispiel der Fig. 1 in teleskopierter Sicherheitsposition;
- Fig. 3: in perspektivischer Explosivdarstellung Bestandteile eines zweiten Ausführungsbeispiels;
- Fig. 4: das zweite Ausführungsbeispiel in Seitenansicht;
- Fig. 5: das zweite Ausführungsbeispiel in Draufsicht und in teilweiser geschnittener Darstellung;
- Fig. 6: eine pyrotechnische Antriebseinrichtung, welche für die teleskopartige Verstellung der Stützkissenteile verwendet werden kann;
- Fig. 7: eine schnittbildliche Darstellung durch eine mechanische Antriebseinrichtung;
- Fig. 8: eine Detaildarstellung aus der Anordnung der Fig. 7 mit um 90° geänderter Blickrichtung;
- Fig. 9: eine schnittbildliche Darstellung durch eine weitere mechanische Antriebseinrichtung; und
- Fig. 10: eine Blockiereinrichtung für die bei den Ausführungsbeispielen der Fig. 7 und 9 verwendeten Sensoren.

Bei den dargestellten Ausführungsbeispielen ist ein Stützkissen 1 über eine Stützeinrichtung 6, welche beispielsweise aus zwei Raststangen bestehen kann, an der Oberseite einer Sitzlehne 22 abgestützt. Das Stützkissen 1 kann an den oberen Enden der Stützeinrichtung 6 in verschiedene Höhenpositionen eingestellt sein. Es ist jedoch auch möglich, zur Höhenverstellung des Stützkissens 1 die Stützeinrichtung 6 in der Sitzlehne 22 verschiebbar an den verschiedenen Höhenpositionen fixierbar zu führen.

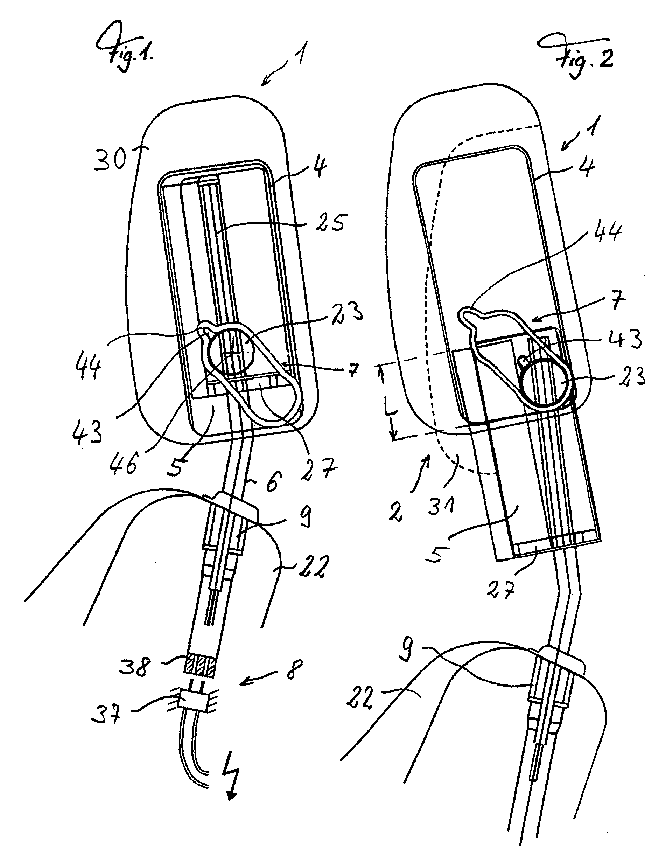

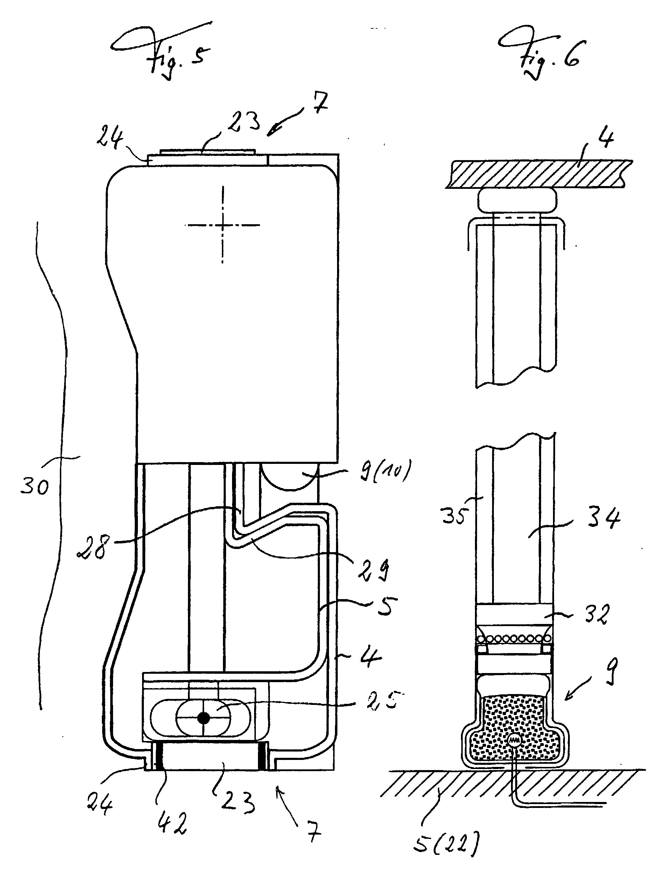

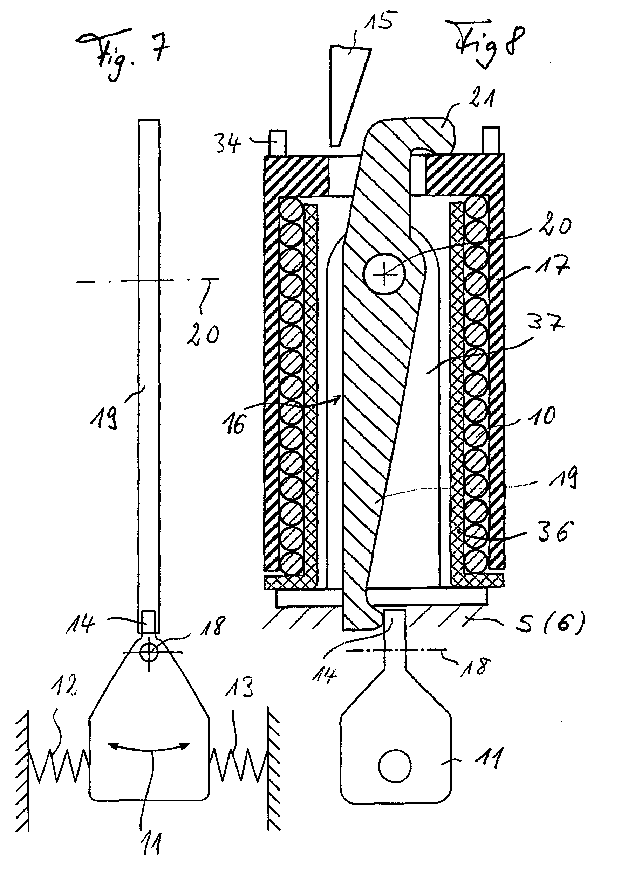

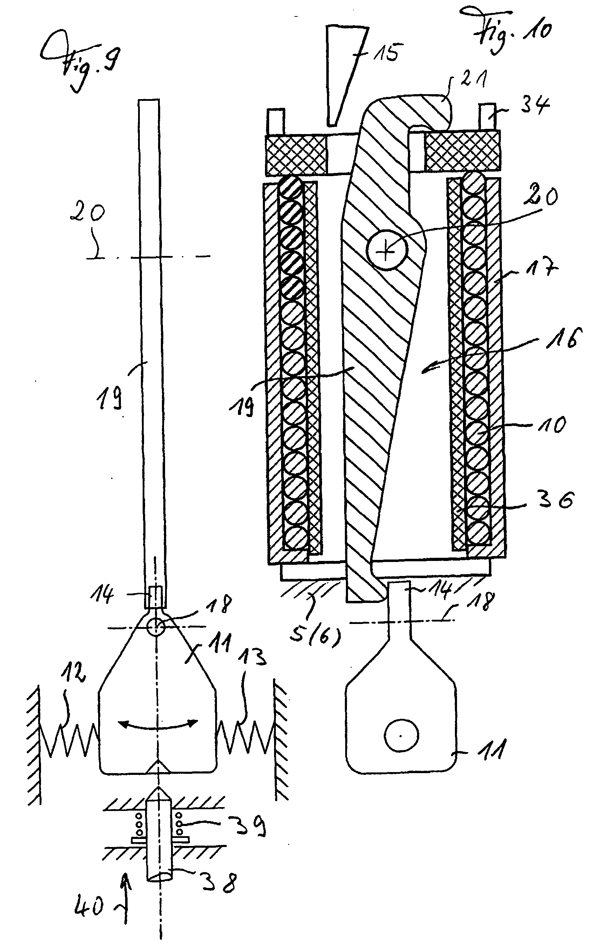

Bei den dargestellten Ausführungsbeispielen besteht das Stützkissen 1 aus zwei Kissenteilen 4 und 5, die in der normalen Betriebsstellung (Fig. 1 und 5) ineinandergeschoben sind. Die beiden Kissenteile 4 und 5 sind mittels einer Verstelleinrichtung in einer im wesentlichen vertikalen und schräg nach vorne geneigten Richtung gegenüber der Stützeinrichtung 6 verschiebbar. Hierzu sind in der Verstelleinrichtung Führungen 7 (Fig. 5) vorgesehen, welche beidseitig am Stützkissen 1 Führungselemente 23 und 24 aufweisen. Das jeweilige Führungselement 23 befindet sich am oberen Stützkissenteil 4. Es kann hierzu auf eine der beiden Raststangen 25 der Stützeinrichtung 6 verschiebbar aufgesetzt sein und in verschiedenen Höhenpositionen an Raststellen 26 verrastbar sein. Hierdurch läßt sich das Stützkissen 1 in verschiedenen Höhenpositionen an der Stützeinrichtung 6 im Normalbetrieb einstellen. Eine Anschlagschelle 27 dient als Führung und Endanschlag für das Führungselement 23 an der Raststange.

Das Führungselement 23 kann an seinem Umfang eine kreisringförmige Führungsfläche 42 um eine Achse 46 aufweisen. An der Führungsfläche 42 ist ein radialer Vorsprung (Nase) 43 vorgesehen. Der radiale Vorsprung ragt mit Klemmsitz in eine entsprechende Ausnehmung 44 im oberen Kissenteil 4. Die Ausnehmung 44 ist an einen schräg geneigten dem Durchmesser der Führungsfläche 42 angepaßten Führungsschlitz 24 im oberen Kissenteil 4 angeformt. Die Führungsfläche 42 ist entlang den Flanken des Führungsschlitzes 42, der schräg geneigt ist, während der teleskopierenden Bewegung der Kissenteile 4 und 5 geführt.

Zur Erzielung einer Komfortstellung des Stützkissens 1 während des Normalbetriebes kann das Führungselement 23, welches mit einem Führungsrohr 48 in die Anschlagschelle 27 eingesetzt ist und an einem Höhenverstellteil 45 der jeweiligen Raststange in vertikaler Richtung verschoben werden. Am Höhenverstellteil 45 der Raststange 25 sind die Raststellen 26 vorgesehen, welche mit einer Rasteinrichtung 49 am Führungselement 23 zusammenwirken, so daß das mit dem Führungselement 23 verbundene Stützkissen 1 in verschiedenen Höhenpositionen an den Raststangen 25 arretiert werden kann.

Durch Drehen des Führungselementes 23 und die Achse 46 kann aufgrund der Mitnahmewirkung, welche zwischen dem radialen Vorsprung 43 und der Ausnehmung 44 vorhanden ist, auch die Neigung des Stützkissens 1 im Normalbetrieb für eine Komfortstellung der Kopfstütze in seiner Neigung verstellt werden. Aufgrund des Formschlusses der durch den radialen Vorsprung 43, welcher mit dem unteren Kissenteil 45 verbunden ist, und der Ausnehmung 44 im oberen Kissenteil 4 hergestellt wird, werden im Normalbetrieb bei jeder beliebigen Komfortneigungsstellung beide Kissenteile 4 und 5 in die gleiche Komfortneigung gebracht.

Aus jeder beliebigen Komfortneigungs- und Komforthöhenstellung des Stützkissens 1 kann die Teleskopierung der beiden Kissenteile zur Erzielung der Sicherheitsposition bzw. des Sicherheitszustandes des Stützkissens 1 erreicht werden.

In bevorzugter Weise besitzt der Höhenverstellteil 45 der jeweiligen Raststange 25 ein anderes Querschnittsprofil als der übrige Teil der Raststange. In bevorzugter Weise hat der Höhenverstellteil 45 eine ovale Querschnittsform. An diese ovale Querschnittsform ist die Form der Befestigungsschelle 27 und des Führungsrohres 48 am Führungselement 23 angepaßt. Beim Übergang von dem ovalen Querschnittsprofil zu einem bevorzugt kreisrunden Querschnittsprofil wird an der Raststange 25 ein Anschlag 47 gebildet. Im teleskopierten Zustand der beiden Kissenteile 4 und 5 kann das untere Kissenteil an dem Anschlag 47 in bevorzugter Weise abgestützt sein. Es ist jedoch auch möglich, daß die Abstützung des unteren Kissenteiles 4 an einer jeweiligen Raststelle 26 erfolgt.

Das Führungselement 23, welches wie oben erläutert gleichzeitig mit den Raststellen 26 als Rastorgan wirkt, ist in jeder Neigungsstellung des Stützkissens 1 formschlüssig in dem schräg geneigten Führungsschlitz 24 des oberen Kissenteiles 4 eingesetzt. Ferner wird durch eine Schwalbenschwanzführung, die durch eine Schwalbenschwanznut 29 im unteren Kissenteil und einen darin eingreifenden Vorsprung 28 am oberen Kissenteil 4 gebildet wird, ein weiterer Formschluß zwischen den beiden Kissenteilen 4 und 5 hergestellt. Die beiden Kissenteile 4 und 5 bestehen aus einem festen Material (z.B. Kunststoff) und das obere Kissenteil 4 ist von einer Kissenpolsterung 30 umgeben. Auch das untere Kissenteil 5 kann eine Polsterung 31 aufweisen.

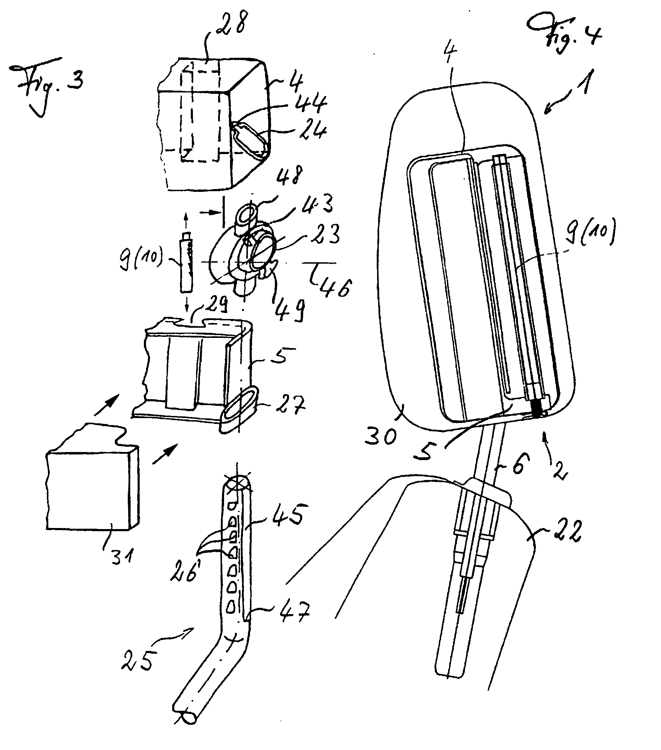

Um die beiden Kissenteile 4 und 5 insbesondere bei einem Unfall gegeneinander zu bewegen, ist ein Kraftspeicher vorgesehen, welcher durch einen Beschleunigungssensor ausgelöst werden kann. Bei dem Ausführungsbeispiel der Fig. 1 und 2 kann der Kraftspeicher, beispielsweise in Form einer Treibgasquelle (pyrotechnischer Gasspeicher und Hybridgasgenerator) 9 in der Lehne 22 untergebracht sein, wobei die Treibgase durch die Hohlräume der beiden Raststangen der Stützeinrichtung 6 wirken und das obere Kissenteil 4 aus der in der Fig. 1 gezeigten Stelle in eine obere Sicherheitsposition, welche in der Fig. 2 dargestellt ist, zu bringen. Hierzu kann auch jeder Raststange eine Treibgasquelle zugeordnet sein.

Bei dem in den Fig. 3 bis 5 dargestellten Ausführungsbeispiel befindet sich der Kraftspeicher, welcher als Treibgasquelle 9 oder als Feder 10 (Fig. 7) ausgebildet sein kann, an der Rückseite des Stützkissens 1.

Bei der Bewegung des oberen Kissenteiles 4 schräg nach vorne und nach oben bezüglich der Stützeinrichtung 6 bleibt der Formschluß zwischen den beiden Kissenteilen 4 und 5, welcher insbesondere durch die Schwalbenschwanzführung (Vorsprung 28 und Nut 29) gebildet wird, über eine Länge L (Fig. 2) aufrechterhalten. Ferner bleibt das untere Kissenteil 5 mit den Raststäben 25 der Stützeinrichtung 6 fest verbunden. Somit wird auch in der teleskopierten Stellung (Sicherheitszustand), in welcher die Fläche der Kopfstütze 1 schräg nach vorne und nach oben sowie gegebenenfalls nach unten vergrößert ist (Fig. 2), eine sichere und kraftschlüssige Verbindung zwischen den Kissenteilen 4 und 5 und der Stützeinrichtung 6 aufrechterhalten.

Bei den dargestellten Ausführungsbeispielen sind zwei Kissenteile schubladenartig ineinander geschoben, welche durch geeignete Mittel, insbesondere durch Klemmsitz im Bereich des Formschlusses im Normalbetrieb zusammengehalten werden. Beim Auseinanderbewegen der Kissenteile wird der Klemmsitz gelöst.Es ist auch möglich, mehr als zwei Kissenteile teleskopierbar ineinander zu schieben, um die gewünschte Vergrößerung des Stützkissens 1 in einer Richtung vertikal nach oben und in bevorzugter Weise schräg nach vorne bei einem Unfallgeschehen zu erreichen.

In den Fig. 6 bis 8 sind geeignete Antriebsmittel vorgesehen, um die teleskopierende Bewegung der Kissenteile zu erzeugen.

Bei dem in der Fig. 6 dargestellten Ausführungsbeispiel wird ein elektrisch zündbare pyrotechnischer Gasgenerator 9 verwendet, durch dessen Treibgas ein Kolben 32 nach oben bewegt wird. Bei geknickten Raststangen der Stützeinrichtung 6 kann der Kolben oberhalb des Knickes vorgesehen sein. Bei geradlinig verlaufenden Raststangen kann der Kolben unmittelbar oberhalb des Gasgenerators 9 vorgesehen sein wie es in Fig. 6 dargestellt ist. Auch bei einer Anordnung des Gasgenerators an der Rückseite des Stützkissens 1 insbesondere im Bereich der Schwalbenschwanzführung (Fig. 5) kann die in der Fig. 6 dargestellte Anordnung gewählt werden. Der Kolben 32 wirkt auf eine Schubstange 34, die am oberen Kissenteil 4 angreift. In der oberen Sicherheitsstellung (Fig. 2) wird eine Rücklaufsperre 33, welche am Kolben 32 vorgesehen ist, wirksam. Diese kann aus Kugeln gebildet werden, die an einer konischen Fläche des Kolbens 32 geführt sind. Der Rücklauf des Kolbens wird dadurch gesperrt, daß die Kugeln gegen die Innenwand einer Kolbenführung 35 gedrückt werden und die Bewegung des Kolbens 32 nach unten blockieren. Die elektrische Zündung des Gasgenerators 9 erfolgt durch einen Beschleunigungssensor, welcher den Zündimpuls auslöst.

Zur Herstellung eines elektrischen Kontaktes 8 (Fig. 1) kann bei der Montage der Stützeinrichtung 6 an der Rückenlehne 22 eine Steckverbindung (Stecker 37, Steckbuchse 38) am unteren Ende eines der Raststäbe der Stützeinrichtung 6 vorgesehen sein. Beim Verankern des Raststabes in der Sitzlehne 22 wird dann automatisch der gewünschte elektrische Anschluß 8 erzielt. Über diesen Anschluß 8 wird das vom Sensor ausgelöste Zündsignal an den Gasgenerator 9 geleitet.

Bei den in den Fig. 7 bis 10 dargestellten Ausführungsbeispiel ist der Kraftspeicher als mechanischer Kraftspeicher ausgebildet. Der mechanische Kraftspeicher wird von der Schraubendruckfeder 10 gebildet. Die Schraubendruckfeder 10, welche an ihrem unteren Ende am unteren Kissenteil 5 bzw. an der Stützeinrichtung 6 abgestützt ist, umfaßt eine innere Federhülse 36. Außen wird die Feder 10 von einer äußeren Federhülse 17 umgeben. Die Feder 10 greift an ihrem oberen Ende beim Ausführungsbeispiel der Fig. 7 an der äußeren Federhülse 17 und beim Ausführungsbeispiel der Fig. 9 an der inneren Federhülse an, die in vertikaler Richtung durch eine nicht näher dargestellte Führungseinrichtung, die ähnlich wie die Kolbenführung 35 der Fig. 6 ausgebildet sein kann, geführt werden. Die Federhülse 17 bzw. 36 kann in der gleichen Weise wie der Kolben 32 über eine Schubstange 34 am oberen Kissenteil 4, wie es in Fig. 6 gezeigt ist, angreifen.

In den Fig. 7 und 9 ist die Feder 10 in ihrem gespannten Zustand, den sie während des normalen Fahrbetriebs einnimmt, dargestellt. Dieser gespannte Zustand wird durch eine Verriegelung 16 gewährleistet. Die Verriegelung 16 besitzt einen um eine Hebelachse 20 schwenkbaren Verriegelungshebel 19. Der Verriegelungshebel 19 ist als zweiseitiger Hebel ausgebildet. Am längeren Hebelarm ist eine Sperre 14 in der dargestellten Ruheposition wirksam. Am kurzen Hebelarm (oberer Hebelarm) des Verriegelungshebels 19 ist ein Riegel 21 angeformt, welcher an der Federhülse 17 angreift und die Federhülse sowie die gespannte Feder 10 in der dargestellten Ruheposition hält.

Die Sperre 14 wird von einer Sensormasse 11, die durch Sensorfedern 12 und 13 abgestützt ist, betätigt. Im Falle einer auf die Sensormasse 11 einwirkenden überhöhten Beschleunigung, beispielsweise bei Frontal- oder Heckaufprall, wird die Sensormasse 11 um eine Sensorachse 18 geschwenkt. Hierdurch wird die Sperre 14 außer Eingriff mit dem unteren Teil des Verriegelungshebels 19 gebracht. Aufgrund der Vorspannung, welche die Feder 10 auf den Verriegelungshebel 19 in Richtung des Lösens des Riegels 21 von der Federhülse 17 ausübt, wird der Verriegelungshebel 19 um seine Hebelachse 20 geschwenkt und der Riegel 21 außer Eingriff mit der Federhülse 17 gebracht. Die Feder 10 kann sich entspannen, so daß die Federhülse 17 (Fig. 7) bzw. 36 (Fig. 9) und die Schubstange 34 nach oben bewegt werden. Hierdurch wird das obere Kissenteil 4 in die in der Fig. 2 dargestellte Position gebracht.

Bei dem in der Fig. dargestellten Ausführungsbeispiel ist der Verriegelungshebel 16 mit seiner Achse 20 an einer Stütze 37 schwenkbar gelagert. Die Stütze 37 ist fest mit dem unteren Kissenteil 5 bzw. der Stützeinrichtung 6 verbunden. Auch die innere Federhülse 36 ist an ihrem unteren Ende fest mit dem unteren Kissenteil 5 bzw. der Stützeinrichtung 6 verbunden.

Um die Antriebseinrichtung wieder in ihre in der Fig. 7 dargestellte vorgespannte Stellung zu bringen, wird auf das obere außenliegende Kissenteil 4 ein nach unten gerichteter Druck ausgeübt. Dabei wird ferner eine Zwangsführung 15 mit dem oberen Arm des Verriegelungshebels 19 in Eingriff gebracht, so daß der Riegel 21 in die in der Fig. 7 dargestellte verriegelte Position gebracht wird. Am unteren Ende liegt der Verriegelungshebel, wie es in der Fig. 7 gezeigt ist, an der Sperre 14 an.

Bei der Ausführungsform der Fig. 9 wird der Verriegelungshebel 19, welcher an der inneren Federhülse 36 gelagert ist, mitbewegt. Bei der Bewegung nach oben wird der Verriegelungshebel 19 durch die Zwangsführung 15 in seine in der Fig. 9 dargestellte Verriegelungsposition, in welcher der Riegel 21 an der Federhülse 36 angreift, gebracht. Hierdurch wird gewährleistet, daß die Feder 10 wieder in ihren gespannten Zustand zurückgebracht werden kann. Hierzu ist es lediglich erforderlich, daß die Federhülse 36 in ihre untere in der Fig. 9 dargestellte Position gebracht wird. Hierzu kann auf das obere außen liegende Kissenteil 4 ein Druck nach unten ausgeübt werden, da der Verriegelungshebel 19 sich in der Verriegelungsstellung mit der Federhülse 36 aufgrund der Wirkung der Zwangsführung 15 befindet. Da sich auch die Sperre 14 in der Sperrposition aufgrund der Rückstellwirkung der Sensorfedern 12 und 13 befindet, wird die in der Fig. 9 dargestellte Verriegelungsposition in einfacher Weise wieder erreicht.

Bei dem in der Fig. 7 dargestellten Ausführungsbeispiel wirkt die innere Federhülse 36, welche fest mit dem unteren Kissenteil bzw. der Stützeinrichtung verbunden ist, als Führung bei der Entspannung der Feder. Bei dem in der Fig. 9 dargestellten Ausführungsbeispiel ist die äußere Federhülse 17 fest mit dem unteren Kissenteil 5 bzw. der Stützeinrichtung 6 verbunden. Bei diesem Ausführungsbeispiel wirkt die äußere Federhülse 17 als Führung für die Feder 10.

In der Fig. 10 ist eine Ausführungsform dargestellt, bei welcher der in den Ausführungsbeispielen der Fig. 7 und 9 verwendete Sensor bei der Sitzlehnenentriegelung über einen nicht näher dargestellten Bowdenzug blockiert werden kann. Hierzu ist ein Sicherungsstift 38 vorgesehen, der bei normaler Position der Sitzlehne durch eine Entriegelungsfeder 39 in die dargestellte entriegelte Position gedrückt ist. Eine Sitzlehne, bei der insbesondere die beiden Vordersitze nach vorne geschwenkt werden, wird bei der Sitzlehnenentriegelung über einen nicht näher dargestellten Bowdenzug der Sicherungsstift 38 gegen die Kraft der Feder 39 in Richtung eines Pfeiles 40 bewegt, so daß er mit einer Eingriffsstelle 41 an der Sensormasse 11 in blockierendem Eingriff kommt. Auf diese Weise wird erreicht, daß die Sperre 14 während des Nachvorneschwenkens der Sitzlehne in ihrer Sperrposition bleibt. Selbst wenn beim Nachvorneschwenken der Sitzlehne erhöhte Kräfte an der Sensormasse 11 wirksam werden, verbleibt diese in der Sperrposition, so daß keine unbeabsichtigte Entriegelungsbewegung des Verriegelungshebels 19 möglich ist. Eine Fehlauslösung beim Verschwenken der Sitzlehne wird dadurch verhindert.

Durch das in den Fig. 7 bis 10 dargestellte Antriebssystem erreicht man einen reversiblen mechanischen Antrieb mit integrierter sensorbetätigter Sperre und Verriegelung, welche ein autarkes Antriebssystem darstellen.

## Patentansprüche

1. Kopfstütze für einen Kraftfahrzeugsitz mit einem Stützkissen (1), welches mittels einer Stützeinrichtung (6) an einer Sitzlehne (22) des Kraftfahrzeugsitzes abgestützt ist und einer Verstelleinrichtung (2) zum Verstellen des Stützkissens (1), wobei das Stützkissen (1) durch die Verstelleinrichtung (2) in seiner vertikalen Ausdehnung veränderbar ist, **dadurch gekennzeichnet, daß** das Stützkissen (1) zwei in vertikaler Richtung zueinander bewegliche Kissenteile (4, 5) aufweist und das wenigstens eines der Kissenteile (4, 5) bezüglich der Stützeinrichtung (6) längs einer schräg geneigten Führung (7, 27, 28) derart bewegbar ist, daß das oben liegende Kissenteil (4) gegenüber seiner Stellung im normalen Betriebszustand schräg nach oben und vorne bewegt ist.

2. Kopfstütze nach Anspruch 1, **dadurch gekennzeichnet, daß** die vertikale Abmessung des Stützkissens (1) bei überhöhter Beschleunigung durch die Verstelleinrichtung (2) vergrößert ist.

3. Kopfstütze nach Anspruch 1 oder 2, **dadurch gekennzeichnet, daß** die Verstelleinrichtung (2) einen bei überhöhter Beschleunigung auslösbaren Kraftspeicher (9, 10) aufweist, der eine Antriebskraft für die Vergrößerung der Stützkissenabmessung in vertikaler Richtung liefert.

4. Kopfstütze nach einem der Ansprüche 1 bis 3, **dadurch gekennzeichnet, daß** wenigstens eines der Kissenteile mit der Antriebskraft des Kraftspeichers (9, 10) beaufschlagbar ist.

5. Kopfstütze nach einem der Ansprüche 1 bis 4, **dadurch gekennzeichnet, daß** die Kissenteile (4, 5) im normalen Betriebszustand ineinandergeschoben sind.

6. Kopfstütze nach einem der Ansprüche 1 bis 5, **dadurch gekennzeichnet, daß** das oben liegende Kissenteil (4) über wenigstens ein unteres Kissenteil (5) mit Formund Kraftschluß an der Stützeinrichtung (6) abgestützt ist.

7. Kopfstütze nach Anspruch 6, **dadurch gekennzeichnet, daß** zwischen den wenigstens zwei Kissenteilen (4, 5) ein sich in Richtung der Relativbewegung der Kissenteile (4, 5) erstreckender Formschluß (28, 29) vorgesehen ist.

8. Kopfstütze nach einem der Ansprüche 1 bis 7, **dadurch gekennzeichnet, daß** der Kraftspeicher mechanisch auslösbar ist.

9. Kopfstütze nach einem der Ansprüche 1 bis 7, **dadurch gekennzeichnet, daß** der Kraftspeicher elektrisch auslösbar ist.

10. Kopfstütze nach Anspruch 9, **dadurch gekennzeichnet, daß** ein elektrischer Anschluß (8) beim Arretieren der Stützeinrichtung (6) am Fahrzeugsitz für die elektrische Auslöseeinrichtung herstellbar ist.

11. Kopfstütze nach Anspruch 10, **dadurch gekennzeichnet, daß** der elektrische Anschluß (8) als Steckverbindung ausgebildet ist.

12. Kopfstütze nach einem der Ansprüche 1 bis 11, **dadurch gekennzeichnet, daß** der Kraftspeicher als Treibgasquelle (9) ausgebildet ist.

13. Kopfstütze nach einem der Ansprüche 1 bis 11, **dadurch gekennzeichnet, daß** der Kraftspeicher als Feder (10) ausgebildet ist.

14. Kopfstütze nach Anspruch 13, **dadurch gekennzeichnet, daß** der als Feder (10) ausgebildete Kraftspeicher reversible Federwirkung hat.

15. Kopfstütze nach einem der Ansprüche 1 bis 14, **dadurch gekennzeichnet, daß** zur Auslösung des Kraftspeichers ein mechanischer Sensor (11; 14) vorgesehen ist.

16. Kopfstütze nach einem der Ansprüche 1 bis 15, **dadurch gekennzeichnet, daß** der mechanische Sensor (11; 14) eine unter Federspannung stehende Verriegelung (16) der Kraftspeicherauslösung in Ruhestellung hält.

17. Kopfstütze nach einem der Ansprüche 1 bis 16, **dadurch gekennzeichnet, daß** der mechanische Sensor eine Sensormasse (11), die über eine oder mehrere Sensorfedern (12, 13) abgestützt ist und eine von der Sensormasse (11) betätigte Sperre (14), welche im Ruhezustand die Verriegelung (16) hält, aufweist.

18. Kopfstütze nach einem der Ansprüche 1 bis 17, **dadurch gekennzeichnet, daß** die Sensormasse (11) und die Sperre (14) einstückig ausgebildet sind.

19. Kopfstütze nach einem der Ansprüche 1 bis 18, **dadurch gekennzeichnet, daß** die Verriegelung (16) nach dem Lösen durch eine Zwangsführung (15) in ihre Verriegelungsposition zurückbewegbar ist und daß beim Zurückbringen des Kraftspeichers (9, 10) in die Ruheposition die Verriegelung (16) durch die ebenfalls in Ruheposition zurückgebrachte Sperre (14) gehalten ist.

20. Kopfstütze nach einem der Ansprüche 1 bis 19, **dadurch gekennzeichnet, daß** nach der Freigabe der Verriegelung (16) die Verriegelung (16) durch den Antrieb des ausgelösten Kraftspeichers (9, 10) bewegt und durch eine Zwangsführung (15) bei dieser Bewegung in die im Ruhezustand eingenommene Verriegelungsposition zurückbewegt ist.

21. Kopfstütze nach Anspruch 20, **dadurch gekennzeichnet, daß** die Sperre (14) durch die wenigstens eine Sensorfeder (12, 13) in Ruheposition zurückgebracht ist.

22. Kopfstütze nach einem der Ansprüche 1 bis 21, **dadurch gekennzeichnet, daß** der Sensor (11, 14) bei einer Sitzlehnenentriegelung gegen ein Ansprechen blockiert ist.

## Claims

1. Headrest for a motor vehicle seat with a support cushion (1) which is supported by means of a support device (6) on a seat backrest (22) of the motor vehicle seat and with an adjusting device (2) for adjusting the support cushion (1), wherein the support cushion (1) can be altered in its vertical extent by the adjusting device (2), **characterised in that** the support cushion (1) comprises two cushion portions (4, 5) movable in a vertical direction relative to each other, and the at least one of the cushion portions (4, 5) is movable in relation to the support device (6) along an obliquely inclined guide (7, 27, 28) in such a way that the top cushion portion (4) is moved obliquely upwards and forwards relative to its position in the normal operating state.

2. Headrest according to claim 1, **characterised in that** the vertical dimension of the support cushion (1) is increased in case of excessive acceleration by the adjusting device (2).

3. Headrest according to claim 1 or 2, **characterised in that** the adjusting device (2) comprises an energy storing device (9, 10) which can be released in case of excessive acceleration and which delivers a driving force for increasing the support cushion dimension in a vertical direction.

4. Headrest according to any of claims 1 to 3, **characterised in that** at least one of the cushion portions can be subjected to the driving force of the energy storing device (9, 10).

5. Headrest according to any of claims 1 to 4, **characterised in that** the cushion portions (4, 5) are slid one inside the other in the normal operating state.

6. Headrest according to any of claims 1 to 5, **characterised in that** the top cushion portion (4) is supported by at least one bottom cushion portion (5) with form and force locking on the support device (6).

7. Headrest according to claim 6, **characterised in that** between the at least two cushion portions (4, 5) is provided a form-locking means (28, 29) extending in the direction of relative movement of the cushion portions (4, 5).

8. Headrest according to any of claims 1 to 7, **characterised in that** the energy storing device can be released mechanically.

9. Headrest according to any of claims 1 to 7, **characterised in that** the energy storing device can be released electrically.

10. Headrest according to claim 9, **characterised in that** an electrical connection (8) can be made on locking the support device (6) to the vehicle seat for the electrical release device.

11. Headrest according to claim 10, **characterised in that** the electrical connection (8) is designed as a plug-in connection.

12. Headrest according to any of claims 1 to 11, **characterised in that** the energy storing device is designed as a propellant gas source (9).

13. Headrest according to any of claims 1 to 11, **characterised in that** the energy storing device is designed as a spring (10).

14. Headrest according to claim 13, **characterised in that** the energy storing device designed as a spring (10) has a reversible spring action.

15. Headrest according to any of claims 1 to 14, **characterised in that** a mechanical sensor (11; 14) is provided for releasing the energy storing device.

16. Headrest according to any of claims 1 to 15, **characterised in that** the mechanical sensor (11; 14) holds in the rest position a locking means (16) of the energy storing device release system, which locking means (16) is under spring tension.

17. Headrest according to any of claims 1 to 16, **characterised in that** the mechanical sensor comprises a sensor mass (11) which is supported by one or more sensor springs (12, 13) and a lock (14) which is actuated by the sensor mass (11) and which holds the locking means (16) in the inoperative state.

18. Headrest according to any of claims 1 to 17, **characterised in that** the sensor mass (11) and the lock (14) are constructed in one piece.

19. Headrest according to any of claims 1 to 18, **characterised in that** after release by a restraint (15) the locking means (16) can be moved back into its locking position and **in that** on return of the energy storing device (9, 10) to the rest position the locking means (16) is held by the lock (14) which has also been returned to the rest position.

20. Headrest according to any of claims 1 to 19, **characterised in that** after release of the locking means (16) the locking means (16) is moved by the drive of the released energy storing device (9, 10) and, upon this movement, moved back by a restraint (15) to the locking position adopted in the inoperative state.

21. Headrest according to claim 20, **characterised in that** the lock (14) is returned to the rest position by the at least one sensor spring (12, 13).

22. Headrest according to any of claims 1 to 21, **characterised in that** on unlocking the seat backrest the sensor (11, 14) is prevented from responding.

## Revendications

1. Appuie-tête pour un siège de véhicule automobile comportant un coussin d'appui (1), qui est supporté par un dispositif de support (6) sur un dossier (22) du siège de véhicule, et un dispositif de déplacement (2) pour le réglage du coussin d'appui (1), la dimension verticale du coussin d'appui (1) pouvant être modifiée à l'aide du dispositif de déplacement (2), **caractérisé en ce que** le coussin d'appui (1) comprend deux parties de coussin (4, 5) mobiles l'une par rapport à l'autre dans la direction verticale et **en ce qu'**au moins une des parties de coussin (4, 5), par rapport au dispositif de support (6) peut être déplacée le long d'une glissière (7, 27, 28) inclinée, de manière telle que la partie de coussin (4) supérieure soit déplacée vers le haut et vers l'avant par rapport à sa position en utilisation normale.

2. Appuie-tête selon la revendication 1, **caractérisé en ce que** la dimension verticale du coussin d'appuie-tête (1), en cas d'accélération anormalement élevée, est augmentée par le dispositif de déplacement (2).

3. Appuie-tête selon la revendication 1 ou 2, **caractérisé en ce que** le dispositif de déplacement (2) comporte un accumulateur de force (9, 10) déclenchable en cas d'accélération anormalement élevée, qui fournit une force d'entraînement pour l'augmentation de la dimension du coussin d'appui dans la direction verticale.

4. Appuie-tête selon une des revendications 1 à 3, **caractérisé en ce qu'**au moins une des parties de coussin peut être sollicitée par la force d'entraînement de l'accumulateur de force (9, 10).

5. Appuie-tête selon une des revendications 1 à 4, **caractérisé en ce que** les parties de coussin (4, 5), en position normale d'utilisation, sont rentrées l'une dans l'autre.

6. Appuie-tête selon une des revendications 1 à 5, **caractérisé en ce que** la partie de coussin supérieure (4) est montée par complémentarité de formes et par adhérence sur le dispositif de support (6), par l'intermédiaire d'au moins une partie de coussin inférieure (5).

7. Appuie-tête selon la revendication 6, **caractérisé en ce qu'**entre les parties de coussin (4, 5) au nombre d'au moins deux est prévue une liaison (28, 29) par complémentarité de formes dans la direction du déplacement relatif des parties de coussin (4, 5).

8. Appuie-tête selon une des revendications 1 à 7, **caractérisé en ce que** l'accumulateur de force peut être déclenché mécaniquement.

9. Appuie-tête selon une des revendications 1 à 7, **caractérisé en ce que** l'accumulateur de force peut être déclenché électriquement.

10. Appuie-tête selon la revendication 9, **caractérisé en ce qu'**une liaison (8) électrique pour le dispositif de déclenchement électrique peut être établie lors de la fixation du dispositif de support (6) au siège de véhicule.

11. Appuie-tête selon la revendication 10, **caractérisé en ce que** la liaison (8) électrique est conformée en liaison enfichable.

12. Appuie-tête selon une des revendications 1 à 11, **caractérisé en ce que** l'accumulateur de force est une source de gaz propulseur (9).

13. Appuie-tête selon une des revendications 1 à 11, **caractérisé en ce que** l'accumulateur de force est un ressort (10).

14. Appuie-tête selon la revendication 13, **caractérisé en ce que** l'accumulateur de force conformé en ressort (10) a une action élastique réversible.

15. Appuie-tête selon une des revendications 1 à 14, **caractérisé en ce qu'**un palpeur mécanique (11, 14) est prévu pour le déclenchement de l'accumulateur de force.

16. Appuie-tête selon une des revendications 1 à 15, **caractérisé en ce que** le palpeur mécanique (11, 14) maintient en position de repos un moyen de retenue (16), sollicité par ressort, pour le dispositif de déclenchement de l'accumulateur de force.

17. Appuie-tête selon une des revendications 1 à 16, **caractérisé en ce que** le palpeur mécanique comprend une masse de palpeur (11) qui est supportée par un ou plusieurs ressort de palpeur (12, 13) et un verrou (14) actionné par la masse de palpeur (11), qui maintient le moyen de retenue (16) en position de repos.

18. Appuie-tête selon une des revendications 1 à 17, **caractérisé en ce que** la masse de palpeur (11), et le verrou (14) sont réalisés d'une pièce.

19. Appuie-tête selon une des revendications 1 à 18, **caractérisé en ce que** le moyen de retenue (16) après le déclenchement peut être ramené par force (15) dans sa position de retenue et **en ce que**, lors du retour de l'accumulateur de force (9, 10) dans la position de repos, le moyen de retenue (16) est tenu par le verrou (14) également ramené dans la position de repos.

20. Appuie-tête selon une des revendications 1 à 19, **caractérisé en ce qu'**après la libération du moyen de retenue (16), le moyen de retenue (16) est déplacé par le moyen d'entraînement de l'accumulateur de force (9, 10) libéré et est ramené par force (15) dans la position de retenue occupée au repos.

21. Appuie-tête selon la revendication 20, **caractérisé en ce que** le verrou (14) est ramené en position de repos par le ressort de palpeur (12, 13) au nombre d'au moins un.

22. Appuie-tête selon une des revendications 1 à 21, **caractérisé en ce que** le palpeur (11, 14) lors d'un déverrouillage du dossier de siège est bloqué contre tout déclenchement.
